# EUROPEAN PATENT SPECIFICATION

(11) **EP 3 637 519 B1**
(45) Date of publication and mention of the grant of the patent: **11.05.2022**
(21) Application number: 18199742.0
(22) Date of filing: 10.10.2018
(51) Int. Cl.: H01M 8/16

(54) **MICROBIAL BATTERY AND FUEL CELL COMPRISING GEOBACTER SULFURREDUCENS UND CLOSTRIDIUM PASTEURIANUM**
MIKROBIELLE BATTERIE UND BRENNSTOFFZELLE ENTHALTEND GEOBACTER SULFURREDUCENS UND CLOSTRIDIUM PASTEURIANUM
BATTERIE ET PILE À COMBUSTIBLE MICROBIENNE COMPRENANT GEOBACTER SULFURREDUCENS UND CLOSTRIDIUM PASTEURIANUM

(43) Date of publication of application: 15.04.2020
(73) Proprietor: Kunz, Philipp, 83671 Benediktbeuem (DE)
(72) Inventor: Kunz, Philipp, 83671 Benediktbeuern (DE)
(74) Representative: Uexküll & Stolberg

(56) References cited:
- US-A1- 2010 304 189
- MOSCOVIZ ROMAN ET AL: "Cooperative growth of Geobacter sulfurreducens and Clostridium pasteurianum with subsequent metabolic shift in glycerol fermentation", SCIENTIFIC REPORTS, NATURE PUBLISHING GROUP, GB , vol. 7, no. 1 13 March 2017 (2017-03-13), pages 1-9, XP009511630, ISSN: 2045-2322, DOI: 10.1038/SREP44334 Retrieved from the Internet: URL:https://www.ncbi.nlm.nih.gov/pmc/?term =%22Sci+Rep%22 journal!
- MOSCOVIZ ROMAN ET AL: "Electro-Fermentation: How To Drive Fermentation Using Electrochemical Systems", TRENDS IN BIOTECHNOLOGY, vol. 34, no. 11, 1 November 2016 (2016-11-01), pages 856-865, XP029778356, ISSN: 0167-7799, DOI: 10.1016/J.TIBTECH.2016.04.009

## Description

### FIELD OF THE INVENTION

Electronic current and voltage is produced upon the help of two sorts of coexisting bacteria, *Geobacter sulfurreducens* und *Clostridium pasteurianum.* The production of electrons will be derived for effective use with cells composed of natural melanin anodes and λ-MnO₂ cathodes.

Production in coexistence will produce a main plus on electrons allowing the anodes and cathodes to transport usable electrons, which will not stay in this 4 component system. principle of Le Châtelier.

### BACKGROUND OF THE INVENTION

*Geobacter sulfurreducens (Gsu)* is a well-studied representative of the Geobacteraceae, which play a critical role in organic matter oxidation coupled to Fe(III) reduction. *Gsu* is able to synthesize amino acids in presence of pyruvate-ferrodoxin oxidoreductase, which catalyzes synthesis of pyruvate from acetate and carbon dioxide. Evaluation of the rates of proton production and consumption in the extracellular and cytoplasmic compartments revealed that energy conservation with extracellular electron acceptors, such as Fe(III), was limited relative to that associated with intracellular acceptors (Mahadevan et al, 2005).

It has been shown that *Gsu* is able to grow using *Clostridium pasteurianum (Cpa)* as a sole electron acceptor via direct interspecies electron transfer (Moscoviz et al, 2017) , which is a syntrophic metabolism in which free electrons flow from one cell to another without being shuttled by reduced molecules. In this study, acetate is the only carbon source and e- donor for the growth of *Gsu,* and the results showed that only 10% of the electron equivalents were consumed for its own growth, while the remaining electron equivalents were considered to be transferred to *Cpa*. Therefore, the two bacteria could be used as the electron donor and acceptor in a microbial fuel cell.

### SUMMARY OF THE INVENTION

In one aspect, the invention provides a process for generating electricity wherein a microbial fuel cell is used, the microbial fuel cell comprising bacteria of the species *Geobacter sulfurreducens (Gsu)* and *Clostridium pasteurianum (Cpa)* and two or more electrodes, wherein the electrodes comprise at least one anode and at least one cathode.

In another aspect, the invention includes a process for storing electricity wherein a microbial battery is used, the microbial battery comprising bacteria of the species *Geobacter sulfurreducens (Gsu)* and *Clostridium pasteurianum (Cpa)* and two or more electrodes, wherein the electrodes comprise at least one anode and at least one cathode.

The processes, fuel cells and batteries of the present invention induce a "forced marriage" between Gsu and Cpa in a small space under the preferred growth conditions, wherein each organism will produce an active atmosphere leading to highly active cell colonies. This will generate ties and bonds between the colonies and thus produce more electrons than a device based on simple coexistence. The Gsu organisms will not ferment in the absence of Cpa. In contrast Cpa can easily be fermented in known fermenters and represents an industry standard. The presence of the medium will maintain a sustainable equilibrium between Gsu and Cpa bacteria. The electron production will be a side effect of the symbiosis. The electrode system covering a wide range of electronegative potentials from at least Mn⁴⁺ (in MnO₂) up to a potent Mn⁷⁺ will induce the flow of electrons which is compensated via electrons produced by Gsu for maintenance reasons (principle of Le Châtelier, adapted to bacterial biochemistry).

In a further aspect, the microbial fuel cell or the microbial battery comprises a fermenter comprising the bacteria, fermentation media and the electrodes.

In a further aspect, the fermenter is operated under anaerobic conditions at a temperature between 30 C - 35 C and at a pH between 6.9 and 8.0.

In a further aspect, the anode comprises biopolymers, including polysaccharides, polypeptides and cellulose derivates, wherein the anode preferably comprises melanin from *Sepia officinalis* and sodium ions.

In a further aspect, the cathode comprises λ-MnO2 or polypyrrole and lignin.

In a further aspect, *Gsu* and *Cpa* are co-cultivated and/or wherein direct interspecies electron transfer occurs between *Gsu* and *Cpa.*

In a further aspect, the bacteria are suspended in the fermentation medium and/or wherein the bacteria are attached to the electrodes and/or wherein the bacteria form a biofilm on the electrodes.

In a further aspect, the bacteria are attached to the electrodes via their pili.

In a further aspect, wherein the fermentation medium is selected from the group consisting of mineral media comprising at least one of ammonia salts, alkali metal salts of dihydrogen phosphates, sulfates, chlorides, amino acids, vitamin solution, trace element solution, acetate/fumarate medium (5,5 mM:30 mM), acetate/Fe(III) citrate medium (5,5 mM:55 mM), ammonia containing medium, glycerol medium, acetate medium and combinations thereof.

In a further aspect, the anode is a melanin anode loaded with sodium ions and the cathode is a λ-MnO₂ cathode.

In a further aspect, the anode delivers +30 mAh/g and the cathode delivers -80 mAh/g.

In a further aspect, electricity is stored in a microbial battery, wherein the microbial battery comprises a fermenter, *Gsu* on a melanin electrode and *Cpa* on a λ-MnO₂ cathode.

In a further aspect, the invention provide a microbial fuel cell comprising a fermenter, fermentation medium, bacteria of the species *Geobacter sulfurreducens (Gsu)* and *Clostridium pasteurianum (Cpa)* and two or more electrodes, wherein the at least one anode is a melanin anode loaded with sodium ions and the at least one cathode is a λ-MnO₂ cathode, wherein the bacteria are suspended in the fermentation medium and/or wherein the bacteria are attached to the electrodes and/or wherein the bacteria form a biofilm on the electrodes.

In another aspect, the invention also provides a microbial battery comprising a fermenter, a fermentation medium, bacteria of the species *Geobacter sulfurreducens (Gsu)* and *Clostridium pasteurianum (Cpa)* and two or more electrodes, wherein the at least one anode is a melanin anode loaded with sodium ions and the at least one cathode is a λ-MnO₂ cathode, wherein the bacteria are suspended in the fermentation medium and/or wherein the bacteria are attached to the electrodes and/or wherein the bacteria form a biofilm on the electrodes.

### DETAILED DESCRIPTION

The inventor of the present invention surprisingly discovered and developed new microbial fuel cell (MFC) constructions that combine the low construction costs and applicability in both natural and artificial constructed environments. Details of the MFCs are shown in the Figures.

The construction of MFCs for the generation of electrical energy comprises a fermenter comprising the bacteria, fermentation media and two or more electrodes. The bacteria used comprise the species *Geobacter sulfurreducens (Gsu)* and *Clostridium pasteurianum (Cpa).* The electrodes comprise at least one anode and at least one cathode.

In the present invention the term "anode electrode" refers to an electrode capable of donating electrons, whereas the the "anode electrode" refers to an electrode capable of donating electrons, whereas the term "cathode electrode" in the present invention refers to an electrode capable of accepting electrons.

In the present invention, the anode comprises biopolymers, including polysaccharides, polypeptides and cellulose derivates. Preferably, the anode comprises melanin from *Sepia officinalis* and sodium ions. The cathode comprises λ-MnO₂ or polypyrrole and lignin.

In a more preferable condition, the anode is a melanin anode loaded with sodium ions and the cathode is a λ-MnO₂ cathode. The fermenter of the microbial fuel cell is operated under anaerobic conditions at a temperature between 30 C - 35 C and at a pH between 6.9 and 8.0.

In the fermenter, *Gsu* and *Cpa* are co-cultivated and/or wherein direct interspecies electron transfer occurs between *Gsu* and *Cpa.* The production of electrons will be derived for effective usage with cells composed of natural melanin anodes and λ-MnO₂ cathode. In the present invention, the term "direct interspecies electrons transfer (DIET)" refers to a syntrophic metabolism in which free electrons flow from one cell to another without being shuttled by reduced molecules.

The fermentation medium is selected from the group consisting of mineral media comprising at least one of ammonia salts, alkali metal salts of dihydrogen phosphates, sulfates, chlorides, amino acids, vitamin solution, trace element solution, acetate/fumarate medium (5,5 mM:30 mM), acetate/Fe(III) citrate medium (5,5 mM:55 mM), ammonia containing medium, glycerol medium, acetate medium and combinations thereof.

The bacteria are preferably suspended in the fermentation medium and/or wherein the bacteria are attached to the electrodes and/or wherein the bacteria form a biofilm on the electrodes.

During direct interspecies electron transfer, electrons are transferred via biological electrical connections between *Gsu* as the electron donor and *Cpa* as the electron acceptor. Contacts between the two partners can be ensured by forming a biofilm on the electrodes or by connecting species with electrodes via their pili. Such biofilms formed by bacteria exhibit conductive properties through pili networks, and thus promote the electron exchanges between *Gsu* and *Cpa*.

In a preferable condition, at least one anode is a melanin anode loaded with sodium ions and the at least one cathode is a λ-MnO₂ cathode. The anode delivers +30 mAh/g and the cathode delivers -80 mAh/g.

Preferably, electricity is stored in a microbial battery, which comprises a fermenter, a fermentation medium, bacteria of the species *Geobacter sulfurreducens (Gsu)* and *Clostridium pasteurianum (Cpa)* and two or more electrodes, wherein the at least one anode is a melanin anode loaded with sodium ions and the at least one cathode is a λ-MnO₂ cathode, wherein the bacteria are suspended in the fermentation medium and/or wherein the bacteria are attached to the electrodes and/or wherein the bacteria form a biofilm on the electrodes.

### REFERENCES

Kim et al, Biologically derived melanin electrodes in aqueous sodium-ion energy storage devices, PNAS, 2013
Mahadevan et al, Characterization of Metabolism in the Fe(III)-Reducing Organism Geobacter sulfurreducens by Constraint-Based Modeling, Applied and environmental microbiology, 2006.
Cord-Ruwisch et al, Growth of Geobacter sulfurreducens with Acetate in Syntrophic Cooperation with Hydrogen-Oxidizing Anaerobic Partners, Applied and environmental microbiology, 1998.
Moscoviz et al, Cooperative growth of Geobacter sulfurreducens and Clostridium pasteurianum with subsequent metabolic shift in glycerol fermentation, Scientific reports, 2017.

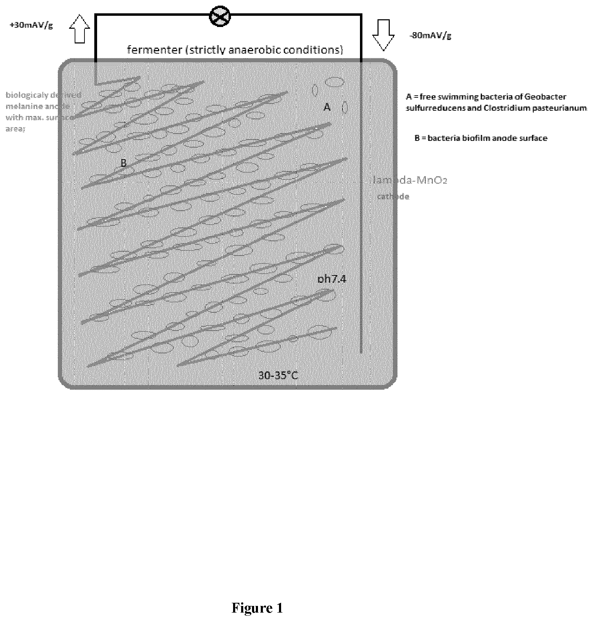

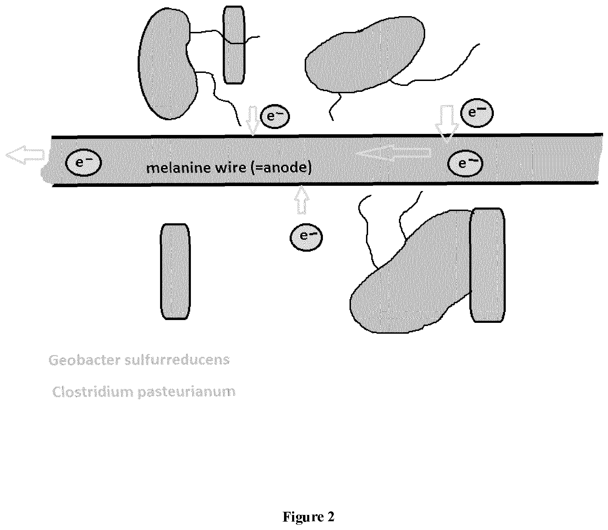

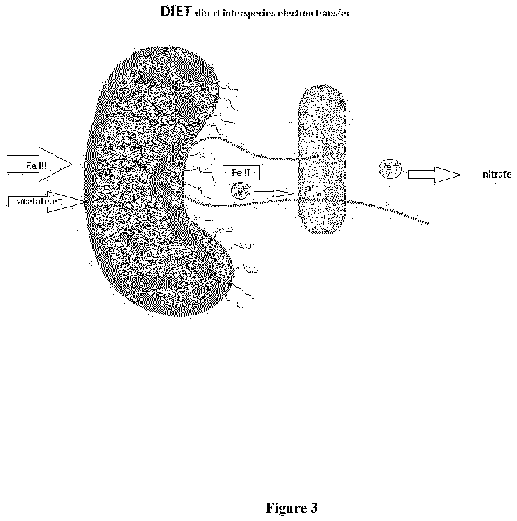

## Claims

1. Process for generating electricity wherein a microbial fuel cell is used, the microbial fuel cell comprising bacteria of the species *Geobacter sulfurreducens (Gsu)* and *Clostridium pasteurianum (Cpa)* and two or more electrodes, wherein the electrodes comprise at least one anode and at least one cathode.

2. Process for storing electricity wherein a microbial battery is used, the microbial battery comprising bacteria of the species *Geobacter sulfurreducens (Gsu)* and *Clostridium pasteurianum (Cpa)* and two or more electrodes, wherein the electrodes comprise at least one anode and at least one cathode.

3. Process according to any of the preceding claims, wherein the microbial fuel cell or the microbial battery comprises a fermenter comprising the bacteria, fermentation media and the electrodes.

4. Process according to any of claims 3 to 4, wherein the fermenter is operated under anaerobic conditions at a temperature between 30 °C - 35 °C and at a pH between 6.9 and 8.0.

5. Process according to any of the preceding claims wherein the anode comprises biopolymers, including polysaccharides, polypeptides and cellulose derivates, wherein the anode preferably comprises melanin from *Sepia officinalis* and sodium ions.

6. Process according to any of the preceding claims, wherein the cathode comprises λ-MnO₂ or polypyrrole and lignin.

7. Process according to any of the preceding claims, wherein the bacteria are suspended in the fermentation medium and/or wherein the bacteria are attached to the electrodes and/or wherein the bacteria form a biofilm on the electrodes.

8. Process according to claim 7, wherein the bacteria are attached to the electrodes via their pili.

9. Process according to any of the preceding claims, wherein the fermentation medium is selected from the group consisting of mineral media comprising at least one of ammonia salts, alkali metal salts of dihydrogen phosphates, sulfates, chlorides, amino acids, vitamin solution, trace element solution, acetate/fumarate medium (5,5mM:30mM), acetate/Fe(III) citrate medium (5,5mM:55mM), ammonia containing medium, glycerol medium, acetate medium and combinations thereof.

10. Process according to any of the preceding claims, wherein the anode is a melanin anode loaded with sodium ions and the cathode is a λ-MnO₂ cathode.

11. Process according to any one of claims 2 to 10, wherein electricity is stored in a microbial battery, wherein the microbial battery comprises a fermenter, *Gsu* on a melanin electrode and *Cpa* on a λ-MnO₂ cathode.

12. Microbial fuel cell comprising a fermenter, a fermentation medium, bacteria of the species *Geobacter sulfurreducens (Gsu)* and *Clostridium pasteurianum (Cpa)* and two or more electrodes, wherein the at least one anode is a melanin anode loaded with sodium ions and the at least one cathode is a λ-MnO₂ cathode, wherein the bacteria are suspended in the fermentation medium and/or wherein the bacteria are attached to the electrodes and/or wherein the bacteria form a biofilm on the electrodes.

13. Microbial battery comprising a fermenter, a fermentation medium, bacteria of the species *Geobacter sulfurreducens (Gsu)* and *Clostridium pasteurianum (Cpa)* and two or more electrodes, wherein the at least one anode is a melanin anode loaded with sodium ions and the at least one cathode is a λ-MnO₂ cathode, wherein the bacteria are suspended in the fermentation medium and/or wherein the bacteria are attached to the electrodes and/or wherein the bacteria form a biofilm on the electrodes.

## Patentansprüche

1. Verfahren zur Erzeugung von Elektrizität unter Verwendung einer mikrobiellen Brennstoffzelle, wobei die mikrobielle Brennstoffzelle Bakterien der Spezies *Geobacter sulfurreducens (Gsu)* und *Clostridium pasteurianum (Cpa)* und zwei oder mehr Elektroden umfasst, wobei die Elektroden mindestens eine Anode und mindestens eine Kathode umfassen.

2. Verfahren zur Speicherung von Elektrizität unter Verwendung einer mikrobiellen Batterie, wobei die mikrobielle Batterie Bakterien der Spezies *Geobacter sulfurreducens (Gsu)* und *Clostridium pasteurianum (Cpa)* und zwei oder mehr Elektroden umfasst, wobei die Elektroden mindestens eine Anode und mindestens eine Kathode umfassen.

3. Verfahren gemäß einem der vorherigen Ansprüche, bei dem die mikrobielle Brennstoffzelle oder die mikrobielle Batterie einen Fermenter umfasst, welcher die Bakterien, Fermentationsmedien und die Elektroden enthält.

4. Verfahren gemäß einem der Ansprüche 3 bis 4, bei dem der Fermenter unter anaeroben Bedingungen bei einer Temperatur zwischen 30°C und 35°C und bei einem pH-Wert zwischen 6,9 und 8,0 betrieben wird.

5. Verfahren gemäß einem der vorherigen Ansprüche, wobei die Anode Biopolymere umfasst, darunter Polysaccharide, Polypeptide und Cellulosederivate, wobei die Anode vorzugsweise Melanin aus *Sepia officinalis* und Natriumionen umfasst.

6. Verfahren gemäß einem der vorherigen Ansprüche, wobei die Kathode λ-MnO₂ oder Polypyrrol und Lignin enthält.

7. Verfahren gemäß einem der vorherigen Ansprüche, wobei die Bakterien in dem Fermentationsmedium suspendiert sind und/oder wobei die Bakterien an den Elektroden haften und/oder wobei die Bakterien einen Biofilm auf den Elektroden bilden.

8. Verfahren gemäß Anspruch 7, wobei die Bakterien über ihre Pili an die Elektroden gebunden sind.

9. Verfahren gemäß einem der vorherigen Ansprüche, wobei das Fermentationsmedium aus der Gruppe bestehend aus mineralischen Medien, die mindestens eines von Ammoniaksalzen, Alkalimetallsalzen von Dihydrogenphosphaten, Sulfaten, Chloriden, Aminosäuren, Vitaminlösung, Spurenelementlösung, Acetat/Fumarat-Medium (5,5mM:30mM), Acetat/Fe(III)-Citrat-Medium (5,5mM:55mM), ammoniakhaltigem Medium, Glycerinmedium, Acetatmedium und Kombinationen davon umfassen.

10. Verfahren gemäß einem der vorherigen Ansprüche, wobei die Anode eine mit Natriumionen beladene Melaninanode und die Kathode eine λ-MnO2-Kathode ist.

11. Verfahren gemäß einem der Ansprüche 2 bis 10, bei dem der Strom in einer mikrobiellen Batterie gespeichert wird, wobei die mikrobielle Batterie einen Fermenter, *Gsu* auf einer Melaninelektrode und *Cpa* auf einer λ-MnO2-Kathode umfasst.

12. Mikrobielle Brennstoffzelle, umfassend einen Fermenter, ein Fermentationsmedium, Bakterien der Spezies *Geobacter sulfurreducens (Gsu)* und *Clostridium pasteurianum (Cpa)* und zwei oder mehr Elektroden, wobei die mindestens eine Anode eine mit Natriumionen beladene Melaninanode und die mindestens eine Kathode eine λ-MnO2-Kathode ist, wobei die Bakterien in dem Fermentationsmedium suspendiert sind und/oder wobei die Bakterien an die Elektroden gebunden sind und/oder wobei die Bakterien einen Biofilm auf den Elektroden bilden.

13. Mikrobielle Batterie, umfassend einen Fermenter, ein Fermentationsmedium, Bakterien der Spezies *Geobacter sulfurreducens (Gsu)* und *Clostridium pasteurianum (Cpa)* und zwei oder mehr Elektroden, wobei die mindestens eine Anode eine mit Natriumionen beladene Melaninanode und die mindestens eine Kathode eine λ-MnO2-Kathode ist, wobei die Bakterien in dem Fermentationsmedium suspendiert sind und/oder wobei die Bakterien an die Elektroden gebunden sind und/oder wobei die Bakterien einen Biofilm auf den Elektroden bilden.

## Revendications

1. Procédé de production d'électricité dans lequel une pile à combustible microbienne est utilisée, la pile à combustible microbienne comprenant des bactéries des espèces *Geobacter sulfurreducens (Gsu)* et *Clostridium pasteurianum (Cpa)* et deux électrodes ou plus, dans lequel les électrodes comprennent au moins une anode et au moins une cathode.

2. Procédé de stockage d'électricité dans lequel une batterie microbienne est utilisée, la batterie microbienne comprenant des bactéries des espèces *Geobacter sulfurreducens (Gsu)* et *Clostridium pasteurianum (Cpa)* et deux électrodes ou plus, dans lequel les électrodes comprennent au moins une anode et au moins une cathode.

3. Procédé selon l'une quelconque des revendications précédentes, dans lequel la pile à combustible microbienne ou la batterie microbienne comprend un fermenteur comprenant les bactéries, des milieux de fermentation et les électrodes.

4. Procédé selon l'une quelconque des revendications 3 à 4, dans lequel le fermenteur fonctionne dans des conditions anaérobies à une température entre 30 °C - 35 °C et à un pH entre 6,9 et 8,0.

5. Procédé selon l'une quelconque des revendications précédentes dans lequel l'anode comprend des biopolymères, comprenant des polysaccharides, des polypeptides et des dérivés de cellulose, dans lequel l'anode comprend de préférence de la mélanine issue de *Sepia officinalis* et des ions sodium.

6. Procédé selon l'une quelconque des revendications précédentes, dans lequel la cathode comprend du λ-MnO₂ ou du polypyrrole et de la lignine.

7. Procédé selon l'une quelconque des revendications précédentes, dans lequel les bactéries sont suspendues dans le milieu de fermentation et/ou dans lequel les bactéries sont fixées aux électrodes et/ou dans lequel les bactéries forment un biofilm sur les électrodes.

8. Procédé selon la revendication 7, dans lequel les bactéries sont fixées aux électrodes via leurs pilus.

9. Procédé selon l'une quelconque des revendications précédentes, dans lequel le milieu de fermentation est sélectionné à partir du groupe constitué de milieux minéraux comprenant au moins un parmi des sels d'ammoniac, des sels de métal alcalin de phosphates de dihydrogène, des sulfates, des chlorures, des acides aminés, une solution vitaminique, une solution d'oligo-éléments, un milieu d'acétate/fumarate (5,5 mM: 30 mM), un milieu d'acétate/citrate de Fe (III) (5,5 mM : 55 mM), un milieu contenant de l'ammoniac, un milieu glycérol, un milieu d'acétate et des combinaisons de ceux-ci.

10. Procédé selon l'une quelconque des revendications précédentes, dans lequel l'anode est une anode de mélanine chargée d'ions sodium et la cathode est une cathode de λ-MnO₂.

11. Procédé selon l'une quelconque des revendications 2 à 10, dans lequel de l'électricité est stockée dans une batterie microbienne, dans lequel la batterie microbienne comprend un fermenteur, du *Gsu* sur une électrode de mélanine et du *Cpa* sur une cathode de λ-MnO₂.

12. Pile à combustible microbienne comprenant un fermenteur, un milieu de fermentation, des bactéries des espèces *Geobacter sulfurreducens (Gsu)* et *Clostridium pasteurianum (Cpa)* et deux électrodes ou plus, dans laquelle ladite au moins une anode est une anode de mélanine chargée d'ions sodium et ladite au moins une cathode est une cathode de λ-MnO₂, dans laquelle les bactéries sont suspendues dans le milieu de fermentation et/ou dans laquelle les bactéries sont fixées aux électrodes et/ou dans laquelle les bactéries forment un biofilm sur les électrodes.

13. Batterie microbienne comprenant un fermenteur, un milieu de fermentation, des bactéries des espèces *Geobacter sulfurreducens (Gsu)* et *Clostridium pasteurianum (Cpa)* et deux électrodes ou plus, dans laquelle ladite au moins une anode est une anode de mélanine chargée d'ions sodium et ladite au moins une cathode est une cathode de λ-MnO₂, dans laquelle les bactéries sont suspendues dans le milieu de fermentation et/ou dans laquelle les bactéries sont fixées aux électrodes et/ou dans laquelle les bactéries forment un biofilm sur les électrodes.
